(19) Europäisches Patentamt
European Patent Office
Office européen des brevets

(11) **EP 3 078 758 B1**

(12) **EUROPEAN PATENT SPECIFICATION**

(45) Date of publication and mention
of the grant of the patent:
**17.04.2019  Bulletin 2019/16**

(21) Application number: **14867222.3**

(22) Date of filing: **27.11.2014**

(51) Int Cl.:
*C22C 38/00* (2006.01)   *C21D 8/06* (2006.01)
*C21D 9/00* (2006.01)   *C22C 38/32* (2006.01)
*C22C 38/54* (2006.01)   *F16B 35/00* (2006.01)
*C22C 38/02* (2006.01)   *C22C 38/04* (2006.01)
*C22C 38/06* (2006.01)   *C22C 38/18* (2006.01)
*C22C 38/22* (2006.01)   *C22C 38/24* (2006.01)
*C22C 38/26* (2006.01)   *C22C 38/28* (2006.01)
*C22C 38/42* (2006.01)   *C22C 38/44* (2006.01)
*C22C 38/48* (2006.01)   *C22C 38/50* (2006.01)
*B21K 1/46* (2006.01)   *C22C 38/20* (2006.01)
*F16B 33/06* (2006.01)

(86) International application number:
**PCT/JP2014/081324**

(87) International publication number:
**WO 2015/083599 (11.06.2015 Gazette 2015/23)**

(54) **STEEL WIRE FOR BOLTS, BOLT, AND METHODS FOR MANUFACTURING SAME**

STAHLDRAHT FÜR BOLZEN, BOLZEN UND HERSTELLUNGSVERFAHREN DAFÜR

FIL D'ACIER POUR BOULONS, BOULON, ET LEURS PROCÉDÉS DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2013  JP 2013249563**

(43) Date of publication of application:
**12.10.2016  Bulletin 2016/41**

(73) Proprietor: **Kabushiki Kaisha Kobe Seiko Sho
(Kobe Steel, Ltd.)
Kobe-shi, Hyogo 651-8585 (JP)**

(72) Inventors:
• **MATSUMOTO, Yosuke
Kobe-shi, Hyogo 657-0863 (JP)**

• **CHIBA, Masamichi
Kobe-shi, Hyogo 657-0863 (JP)**

(74) Representative: **Müller-Boré & Partner
Patentanwälte PartG mbB
Friedenheimer Brücke 21
80639 München (DE)**

(56) References cited:
**EP-A2- 2 423 344**       **WO-A1-2006/088019**
**WO-A1-2006/088019**     **WO-A1-2011/108459**
**WO-A1-2013/051513**     **JP-A- 2001 011 575**
**JP-A- 2009 007 644**     **JP-A- 2012 041 587**
**JP-A- 2012 162 798**     **JP-A- 2013 082 963**
**JP-A- 2013 227 647**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a bolt for use in automobiles, various industrial machines and the like; a steel wire for bolts that is used to manufacture the bolts mentioned above; and methods for manufacturing the bolt and the steel wire. More specifically, the present invention relates to a high-strength bolt having a high tensile strength of 1,000 to 1,400 MPa and exhibiting an excellent delayed fracture resistance, a steel wire for bolts that is used to manufacture the above-mentioned high-strength bolt, and useful methods for manufacturing the bolt and the steel wire.

Background Art

Bolts for use in the aforesaid applications tend to cause delayed fracture when the bolts have a tensile strength of 1,000 MPa or more. In many cases, high-strength bolts with a tensile strength of 1,000 MPa or more have been made using standard alloy steels as material, such as a chromium molybdenum steel (SCM) and a chromium steel (SCr) that are defined by the JIS G 4053. However, in recent years, in order to reduce costs, boron (B) -added steels have been widely used as material because they can omit or simplify a spheroidizing annealing process and a wire-drawing process when producing bolts.

The B-added steel compensates for the hardenability by the addition of B instead of omitting or reducing Mo or Cr from the above-mentioned SCM steel and SCr steel. Furthermore, the B-added steel achieves a tensile strength of approximately 1,000 to 1,400 MPa by being tempered at a lower temperature than that of the SCM steel or SCr steel. However, the B-added steel is generally has a delayed fracture resistance inferior to that of the standard alloy steels such as the SCM steel and the SCr steel. For this reason, various studies have been undertaken on techniques for further improving the delayed fracture resistance of the B-added steel.

For example, Patent Documents 1 and 2 propose the following techniques to improve the delayed fracture resistance of the B-added steel. The techniques mentioned in Patent Documents 1 and 2 are basically designed to prevent the grain coarsening, thereby improving the delayed fracture resistance. In Patent Document 1, a rolled material heated to 1050°C or higher is hot-rolled into a wire material, and then cooled to 600°C or lower with controlling a cooling rate to precipitate TiC and Ti(CN), which prevents the grain coarsening. In Patent Document 2, Ti compounds other than TiN and the grain size of ferrite crystals obtained after the hot-rolling are specified to prevent the grain coarsening. However, the prevention of the grain coarsening alone cannot ensure the same level of a delayed fracture resistance as that of the standard alloy steel.

On the other hand, Patent Document 3 proposes a technique regarding a steel wire with excellent cold forgeability and its manufacturing method. This technique involves controlling the number of carbides and the ferrite grain size to improve the cold forgeability, and B is added as appropriate. However, such a technique involves annealing after the wire-drawing process, and forming into the shape of a component, and thus it cannot exhibit the same level of a delayed fracture resistance as that of the standard alloy steel.

Patent Document 4 proposes a technique in which water or water-soluble quenching medium is used during the quenching process, thereby achieving both a strength and a delayed fracture resistance. However, in the water quenching, significant variations in strength occur, and the temperature of finish rolling and the wire-drawing rate are not appropriate, thus making it difficult to achieve the same level of the delayed fracture resistance as that of the standard alloy steel.

As mentioned above, the proposed techniques cannot offer the same level of the delayed fracture resistance as that of the standard alloy steel.

Patent document 5 discloses a wire suitable for manufacturing a bolt and a method of manufacturing a steel wire for bolts.

Patent Document 1: JP 11-043737 A
Patent Document 2: JP 10-053834 A
Patent Document 3: WO 2011/108459
Patent Document 4: JP 2001-62639 A
Patent Document 5: WO 2006/088019 A1

Summary of Invention

Problems to be Solved by the Invention

The present invention has been made in view of the foregoing circumstances, and it is an object of the present invention to provide a bolt that exhibits the same level of a delayed fracture resistance as that of the standard alloy steel even when omitting or reducing Mo and Cr comparing with amounts of Mo and Cr in the SCM steel and the SCr steel, a steel wire for bolts used to manufacture the above-mentioned bolt, and useful methods for manufacturing the bolt and the steel wire.

Means for Solving the Problems

A steel wire for bolts according to the present invention, which can solve the above-mentioned problem, includes, in percentage by mass:

C: 0.20 to 0.35%;
Si: 0.01% to 2.0%;
Mn: 0.3 to 1.5%;
P: more than 0% and 0.020% or less;
S: more than 0% and 0.020% or less;
Cr: 0.10 to 1.5%;
Al: 0.01 to 0.10%;
B: 0.0005 to 0.005%;
N: 0.001% to 0.015%; and at least one element of Ti: 0.02 to 0.10% and Nb: 0.02 to 0.10%, optionally at least one of the following elements (a) to (d):

(a) one or more elements selected from the group consisting of: Cu: more than 0% and 0.3% or less, Ni: more than 0% and 0.5% or less, and Sn: more than 0% and 0.5% or less;
(b) at least one element of Mo: more than 0% and 0.3% or less, and V: more than 0% and 0.3% or less;
(c) at least one element of Mg: more than 0% and 0.01% or less and Ca: more than 0% and 0.01% or less; and
(d) at least one element of Zr: more than 0% and 0.3% or less and W: more than 0% and 0.3% or less,

and the balance consisting of iron and inevitable impurities, wherein
when a rate of a B (boron) content at $D_0/4$ part in the steel wire for bolts is 100% where $D_0$ is a diameter of the steel wire for bolts, a ratio of a B content at a surface of the steel wire for bolts is 75% or less on average, and a difference between a maximum value and a minimum value of the ratio is 25% or less, and wherein a prior austenite crystal grain size number in a region from the surface to a depth of 100 $\mu$m of the steel wire for bolts is No. 8 or more.

A method of manufacturing the above-mentioned steel wire for bolts according to the present invention, which can solve the above-mentioned problem, includes at least a manufacturing step (1) below, using a wire material having the chemical composition mentioned above:(1) in a step of wire-drawing the wire material into the steel wire for bolts, the wire material before wire-drawing is heated at a temperature from 650 to 800°C for 3.0 to 24 hours, and then drawn so that a reduction rate of the cross-sectional area is 23% or more. A bolt according to the present invention, which can solve the above-mentioned problem, is a bolt produced by forming a steel wire for bolts into a bolt shape, the steel wire including, in percentage by mass: C: 0.20 to 0.35%; Si: 0.01% to 2.0%; Mn: 0.3 to 1.5%; P: more than 0% to 0.020% or less; S: more than 0% and 0.020% or less; Cr: 0.10 to 1.5%; Al: 0.01 to 0.10%; B: 0.0005 to 0.005%; N: 0.001% to 0.015%; and at least one element of Ti: 0.02 to 0.10% and Nb: 0.02 to 0.10%, optionally at least one of the following elements (a) to (d):

(a) one or more elements selected from the group consisting of: Cu: more than 0% and 0.3% or less, Ni: more than 0% and 0.5% or less, and Sn: more than 0% and 0.5% or less;
(b) at least one element of Mo: more than 0% and 0.30% or less and V: more than 0% and 0.30% or less;
(c) at least one element of Mg: more than 0% and 0.01% or less and Ca: more than 0% and 0.01% or less; and
(d) at least one element of Zr: more than 0% and 0.3% or less and W: more than 0% and 0.3% or less

and the balance consisting of iron and inevitable impurities, wherein when a rate of a B content at a $D_1/4$ part in the bolt is 100% where $D_1$ is a diameter of a shank portion of the bolt, a ratio of a B content at the surface of the bolt is 75% or less on average, and a difference between a maximum value and a minimum value of the ratio is 25% or less, and

wherein a prior austenite crystal grain size number in a region from the surface to a depth of 100 $\mu$m of the bolt is No. 8 or more wherein the bolt has a tensile strength of 1,000 to 1,400 MPa.

A method of manufacturing the above-mentioned bolt according to the present invention, which can solve the above-mentioned problem, includes at least one of manufacturing steps (1) and (2) below, using a wire material having the chemical composition mentioned above:

(1) in a step of wire-drawing the wire material into the steel wire for bolts, the wire material before wire-drawing is heated at a temperature from 650 to 800°C for 3.0 to 24 hours, and then drawn so that a reduction rate of the cross-sectional area is 23% or more; and

(2) in a step of hot-heading for forming the steel wire for bolts into a shape of a head-formed product, the steel wire for bolts before hot-heading is heated at a temperature from 800 to 950°C for 10 to 60 minutes, and then hot-heading so that a reduction rate of the cross-sectional area at the axial part of the bolt is 10% or more when forming the steel wire for bolts into the shape of the head-formed product.

Effects of the Invention

With the structure mentioned above, the present invention can achieve the bolt that prevents the grain coarsening and reduce the content of B compounds at the surface that would otherwise serve as a starting point of the delayed fracture, thus exhibiting the excellent delayed fracture resistance.

Mode for Carrying Out the Invention

First of all, a steel wire for bolts and a B content in each surface of the bolt, which most characterize the present invention, will be described below.

The inventors have studied a lot about the causes for the inferior delayed fracture resistance of a B-added steel, compared to the standard alloy steel. As a result, it has been found that in the B-added steel, a B-containing compound precipitates at the surface of a steel wire for bolts or at the surface of a bolt, and then serves as a starting point to cause delayed fracture.

For this reason, the inventors have further studied diligently methods for reducing the amount of B-containing compounds that could become the starting point of the delayed fracture. Based on the result of the study, the inventors have found that it is effective to undertake the following means in order to use a boron-removal phenomenon that occurs when heating the B-added steel at a high temperature. The manufacture of the steel wire for bolts involves controlling the heating conditions in the step of wire-drawing the wire material into the steel wire for bolts and the reduction rate of the cross-sectional area after the wire-drawing step.

The manufacture of the bolt involves (i) using the steel wire for bolts obtained under the above-mentioned conditions, (ii) controlling the heating conditions in a hot-heading step of hot-heading a steel wire for bolts into the shape of a head-formed product and the reduction rate of the cross-sectional area thereafter in the use of the steel wire for bolts that does not satisfy the above-mentioned conditions, or (iii) using both the conditions of (i) and (ii).

The above-mentioned manufacturing method for the steel wire for bolts according to the present invention can form a uniform layer with a low B content at the surface of the steel wire for bolts. Specifically, when a rate of a B content at a $D_0$/4 part in the steel wire for bolts is 100% where $D_0$ is a diameter of the steel wire for bolts, a ratio of a B content at the surface of the steel wire for bolts is reduced to 75% or less on average, and a difference between a maximum value and a minimum value of the ratio is 25% or less, which can produce the steel wire for bolts with small variations in the B content in its surface and substantially the uniform concentration.

Likewise, the above-mentioned manufacturing method for the bolt according to the present invention can form a uniform layer with a low B content at the surface of the bolt. Specifically, when $D_1$ is a diameter of the bolt, and a B content in a $D_1$/4 part of the steel wire for bolts is set to 100%, a ratio of a B content at the surface of the bolt to that in the $D_1$/4 part is reduced to 75% or less on average, and a difference between a maximum value and a minimum value of the ratio is 25% or less, which can produce the bolt with small variations in the B content in its surface and substantially the uniform concentration. As a result, it has been found that the delayed fracture resistance of the bolt is improved significantly.

In the present invention, the above-mentioned B content is determined by measuring a B content at the surface, regardless of the steel wire for bolts or the bolt, as mentioned above. This is because the term "B content at the surface" as used herein represents a B content in a superficial layer extending from the surface that would generally become the starting point of the delayed fracture to a depth of about 100 $\mu$m.

The B content is defined by the relationship with each B content in the $D_0$/4 part of the steel wire for bolts (where $D_0$ represents the diameter of the steel wire for bolts) or in the $D_1$/4 part of the bolt (where $D_1$ represents the diameter of the bolt shank portion) . Note that the above-mentioned $D_0$/4 part or $D_1$/4 part is selected as a part located in the position with an average B content of the wire material before the wire-drawing process, or of the steel wire for bolts before the hot-heading process. Hereinafter, the $D_0/4$ part of the steel wire for bolts or the $D_1/4$ part of the bolt is sometimes referred to as a simple "inside".

The B content at the surface is lower than the B content in the inside of the steel wire or the bolt, so that the number of B-containing precipitates that could serve as the starting point of the delayed fracture can be reduced, thereby improving the delayed fracture resistance. To exhibit such an effect, in either the steel wire for bolts or the bolt, when the B content in the inside thereof is set to 100%, a ratio of the B content at the surface thereof to the B content in the inside thereof needs to be 75% or less on average. The average B content at the surface calculated in this way is preferably 60% or less, and more preferably 50% or less.

Note that from the viewpoint of the above-mentioned matter, the lower limit of the average B content at the surface is not specifically limited. However, when taking into consideration the hardenability and the like, the lower limit of the average B content at the surface is preferably approximately 10% or more.

Further, in the present invention, regardless of the steel wire for bolts or the bolt, when calculating the ratio of the B content at the surface thereof to the B content in the inside thereof, a difference between the maximum value and the minimum value of the ratio is 25% or less. To improve the delayed fracture resistance by decreasing the B content at the surface, it is necessary to reduce the B content at the surface as well as to uniformly form a layer with the reduced B content at its surface. For this reason, it is effective to decrease a difference between the maximum value and the minimum value of the ratio as mentioned above. Specifically, as shown in columns for Examples to be mentioned later, the B contents in any four points of each of the surface and the inside are measured, thereby calculating the average thereof and a difference between the maximum value and the minimum value. The B content in the steel wire for bolts used in the present invention is extremely small, specifically, 0.0005 to 0.005%. Thus, even when the difference between the maximum value and the minimum value changes by 0.0001%, which is a detection limit of a measuring device, the delayed fracture resistance varies widely. Based on the result of the study by the inventors, it is found that when the difference between the above-mentioned maximum value and minimum value exceeds 25%, the B content at the surface becomes uniform, degrading the delayed fracture resistance. The smaller the difference between the maximum value and the minimum value is, the better the delayed fracture resistance becomes. For example, the difference between the maximum and minimum values is preferably 15% or less, more preferably 5% or less, and most preferably 0%.

The B content in the steel wire for bolts or the bolt, which most characterizes the present invention, has been mentioned above.

Further, in the steel wire for bolts or the bolt in the present invention, a prior austenite crystal grain size number in a region from the surface of the steel wire for bolts or the bolt to a depth of 100 μm is No. 8 or more. The prior austenite in the region is made finer, thus improving the toughness, further enabling the improvement of the delayed fracture resistance. To exhibit such an effect, the prior austenite crystal grain size number in the region needs to be No. 8 or more when measured on the basis of the JIS G 0551. The prior austenite crystal grain size number in the region is preferably No. 10 or more, and more preferably No. 12 or more. Note that the larger the prior austenite crystal grain size number is, the better the steel becomes. The upper limit of the prior austenite crystal grain size number is not specifically limited, but normally 15 or less.

To exhibit the adequate basic properties and delayed fracture resistance as the bolt, in the present invention, it is necessary to adjust the chemical composition of the steel as appropriate . The chemical composition is common to the steel wire for bolts and the bolt, and the reason for setting the range of the content of each element in the composition will be described below.

(C: 0.20 to 0.35%)

Carbon (C) is an element effective in ensuring the strength of a steel and improving the hardenability thereof . In particular, to ensure a tensile strength of 1,000 MPa or more, the C content needs to be 0.20% or more. The C content is preferably 0.22% or more, and more preferably 0.24% or more. On the other hand, any excessive C content degrades the toughness and corrosion resistance of the steel, thus reducing the delayed fracture resistance. Thus, the C content is set at 0.35% or less. Accordingly, the C content is preferably 0.33% or less, and more preferably 0.30% or less.

(Si: 0.01% to 2.0%)

Silicon (Si) acts as a deoxidizing agent when being smelted, and is essential to serve as a solid solution element to strengthen the steel. To exhibit such effects, the Si content is set to 0.01% or more. The Si content is preferably 0.03% or more, and more preferably 0.05% or more. On the other hand, in terms of the delayed fracture resistance, the upper limit of the Si content is not specifically limited. However, as the Si content is increased, the headability during the manufacture of bolts is reduced. Thus, the Si content is 2.0% or less. The upper limit of the Si content is more preferably 1.5% or less, and further preferably 1.0% or less.

(Mn: 0.3 to 1.5%)

Manganese (Mn) is an element for improving the hardenability. Mn is an important element in achieving the tensile strength of especially 1,000 MPa or higher. To effectively exhibit such effects, the Mn content is set at 0.3% or more. The Mn content is preferably 0.4% or more, and more preferably 0.5% or more. On the other hand, any excessive Mn content assists in segregation into the crystal grain boundary to degrade the strength of the crystal grain boundary, thus reducing the delayed fracture resistance. Thus, the Mn content needs to be 1.5% or less. The upper limit of Mn content is preferably 1.3% or less, and more preferably 1.1% or less.

(P: more than 0% and 0.020% or less)

Phosphorus (P) is contained as an inevitable impurity. Any excessive P content causes a grain boundary segregation, thereby reducing the strength of the grain boundary, degrading the delayed fracture resistance. For this reason, the upper limit of P content is set at 0.020% or less. The upper limit of P content is preferably 0.015% or less, and more preferably 0.010% or less . As the P content is decreased, the delayed fracture resistance of the steel is improved, but the productivity and manufacturing cost are worsened. Thus, the lower limit of P content is preferably 0.001% or more.

(S: more than 0% and 0.020% or less)

Any excessive S content causes the segregation of sulfides in the crystal grain boundary, leading to the reduction of the strength of the crystal grain boundary, thus degrading the delayed fracture resistance. For this reason, the upper limit of S content is set at 0.020% or less. The upper limit of S content is preferably 0.015% or less, and more preferably 0.010% or less. As the S content is decreased, the delayed fracture resistance of the steel is improved, but the productivity and manufacturing cost are worsened. Thus, the lower limit of S content is preferably 0.001% or more

(Cr: 0.10 to 1.5%)

Chromium (Cr) is effective in improving the hardenability and delayed fracture resistance, while contributing to improving the corrosion resistance. To effectively exhibit such effects, the C content is set at 0.10% or more. Thus, the Cr content is preferably 0.15% or more, and more preferably 0.20% or more. On the other hand, any excessive Cr content increases the cost. Thus, the upper limit of Cr content is set at 1.5% or less. Thus, the Cr content is preferably 1.2% or less, and more preferably 1.0% or less.

(Al: 0.01 to 0.10%)

Aluminum (Al) is an element effective in deoxidizing steel, and can prevent the coarsening of austenite grains by forming AlN. Binding of Al with N increases the amount of free-B, which does not form a compound, thereby improving the hardenability. To exhibit this effect, the Al content needs to be 0.01% or more. Thus, the Al content is preferably 0.02% or more, and more preferably 0.03% or more. In contrast, any excessive Al content saturates its effects. The upper limit of Al content is set at 0.10% or less. Thus, the Al content is preferably 0.08% or less, and more preferably 0.06% or less.

(B: 0.0005 to 0.005%)

Boron (B) is an element effective in improving the hardenability of steel. To effectively exhibit such an effect, it is necessary to set the B content at 0.0005% or more, and to add B to the steel, together with at least one element of Ti and Nb. The B content is preferably 0.0007% or more, and more preferably 0.001% or more. On the other hand, any excessive B content that exceeds 0.005% generates a large amount of B-containing compound, thereby degrading the toughness of the steel. The B content is preferably 0.004% or less, and more preferably 0.003% or less.

(N: 0.001% to 0.015%)

Nitrogen (N) can prevent the grain coarsening by forming nitrides with Al, Ti, or Nb. To exhibit this effect, the N content needs to be 0.001% or more. The N content is preferably set at 0.002% or more, and more preferably 0.003% or more. On the other hand, in terms of the delayed fracture resistance, the upper limit of N content is not specifically limited. Any excessive N content increases the amount of solid-soluted N, degrading the cold headability. Thus, the upper limit of N content is 0.015% or less. The upper limit of N content is preferably 0.012% or less, and more preferably 0.010% or less.

(At least one element of Ti: 0.02 to 0.10% and Nb: 0.02 to 0.10%)

Titanium (Ti) and niobium (Nb) are elements forming carbonitrides . At least one of them is contained in 0.02% or more, thereby enabling the prevention of grain coarsening. N in the steel is firmly fixed as TiN or NbN, which increases the amount of free-B, thereby enabling the improvement of the hardenability of the steel. Thus, the content of each element is preferably 0.030% or more, and more preferably 0.035% or more. In contrast, any excessive Ti content and Nb content, each of which exceeds 0.10%, leads to the reduction in workability and an increase in cost. The content of either element is preferably 0.08% or less, and more preferably 0.07% or less.

The basic components in the steel wire for bolts and the bolt in the present invention have been mentioned above, and the balance consisting of iron and inevitable impurities other than P and S mentioned above. The inevitable impurities are allowable that are brought into the steel, depending on raw material, resources, manufacturing equipment, etc. The bolt of the present invention further contains, in addition to the above-mentioned basic components, the following selected elements as appropriate, which is very effective. The appropriate ranges of the contents and functions of these elements will be described below.

(One or more elements selected from the group consisting of:

Cu: more than 0% and 0.3% or less,
Ni: more than 0% and 0.5% or less, and
Sn: more than 0% and 0.5% or less)

Copper (Cu), nickel (Ni), and tin (Sn) are elements improving the corrosion resistance and thus can reduce the amount of hydrogen generated due to the corrosion, thereby effectively improving the delayed fracture resistance. One kind of these elements may be added independently, or two or more kinds of them may be used in combination.

To effectively exhibit such effects, the Cu content is preferably set at 0.03% or more. On the other hand, any excessive Cu content increases the cost. Thus, the upper limit of Cu content is preferably set at 0.3% or less. The Cu content is more preferably 0.20% or less, and further preferably 0.15% or less.

To effectively exhibit such effects, the Ni content is preferably set at 0.03% or more. On the other hand, any excessive Ni content increases the cost. Thus, the upper limit of Ni content is preferably set at 0.5% or less. The Ni content is more preferably 0.4% or less, and further preferably 0.3% or less.

To effectively exhibit the above-mentioned effects, the Sn content is preferably set at 0.03% or more. On the other hand, any excessive Sn content increases the cost. Thus, the upper limit of Sn content is preferably set at 0.5% or less. The Sn content is more preferably 0.4% or less, and further preferably 0.3% or less.

(At least one element of Mo: more than 0% and 0.30% or less and V: more than 0% and 0.30% or less)

Molybdenum (Mo) and vanadium (V) are elements improving the hardenability and are effective in achieving the high strength. These elements form fine carbonitrides and can prevent the coarsening of the austenite grains, thereby improving the delayed fracture resistance. One of these elements may be added independently, or two or more of them may be used in combination.

To effectively exhibit such effects, the Mo content is preferably set at 0.03% or more. On the other hand, any excessive Mo content increases the cost. Thus, the upper limit of Mo content is preferably set at 0.30%. The Mo content is more preferably 0.27% or less, and further preferably 0.25% or less.

To effectively exhibit the above-mentioned effects, the V content is preferably set at 0.02% or more. The lower limit of V content is more preferably 0.04% or more, and further preferably 0.05% or more. On the other hand, any excessive V content increases the cost. Thus, the upper limit of V content is preferably set at 0.30% or less. The upper limit of V content is more preferably 0.20% or less, and further preferably 0.15% or less.

(At least one element of Mg: more than 0% and 0.01% or less and Ca: more than 0% and 0.01% or less)

Magnesium (Mg) and calcium (Ca) are elements effective in deoxidizing steel, and can prevent the coarsening of austenite grains by forming a composite compound with Ti and Al. To exhibit such an effect, the Mg content is preferably 0.001% or more, and the Ca content is preferably 0.001% or more. On the other hand, even though the content of each of these elements is more than 0.01%, the above-mentioned effect is saturated. The upper limit of each of these elements is more preferably 0.005% or less, and further preferably 0.001% or less. One of these elements may be added individually, or two or more of them may be used in combination.

(At a least one element of Zr: more than 0% and 0.3% or less and W: more than 0% and 0.3% or less)

Zinc (Zr) and tungsten (W) are elements that form carbonitrides and contribute to preventing the coarsening of the austenite grains. One of these elements may be added independently, or two or more of them may be used in combination.

To effectively exhibit the above-mentioned effects, the Zr content is preferably set at 0.01% or more. The lower limit of Zr content is more preferably 0.02% or more, and further preferably 0.03% or more. On the other hand, any excessive Zr content increases the cost. Thus, the upper limit of Zr content is preferably set at 0.3% or less. The upper limit of Zr content is more preferably 0.2% or less, and further preferably 0.1% or less.

To effectively exhibit the above-mentioned effects, the W content is preferably set at 0.01% or more. The lower limit of W content is more preferably 0.02% or more, and further preferably 0.03% or more. On the other hand, any excessive W content increases the cost. Thus, the upper limit of W content is set at 0.3% or less. The upper limit of the W content is more preferably 0.15% or less, and further preferably 0.10% or less.

A method of manufacturing the steel wire for bolts in the present invention will be described below.

The steel wire for bolts in the present invention is manufactured by hot rolling a billet obtained by casting into a wire material, and then wire-drawing the obtained wire material.

(Hot-rolling step from the billet to wire material)

To manufacture the steel wire for bolts that satisfies the above-mentioned requirements, it is necessary to appropriately control a "wire-drawing step" of drawing the wire material into the steel wire for bolts" to be mentioned in detail later, and thus the previous hot-rolling step is not specifically limited. For example, the control is preferably performed in the following way:

heating temperature before hot-rolling: 750 to 1,300°C;
heating time before hot-rolling: 30 to 720 minutes;
hot-rolling temperature: 700 to 1,100°C; and
reduction rate of the cross-sectional area in the hot-rolling process: 99.0 to 99.9%.

The above-mentioned reduction rate of the cross-sectional area of the steel wire is determined by the following formula.

```
Reduction rate of the cross-sectional area in the
hot-rolling process = {(cross-sectional area of billet -
cross-sectional area of wire material)/(cross-sectional area of
billet)} × 100 (%)
```

(Wire-drawing step for drawing the wire material into a steel wire for bolts)

In the step of wire-drawing from the wire material into the steel wire for bolts, the wire material is heated at 650 to 800°C for 1.0 to 24 hours, and is then drawn to attain a reduction rate of the cross-sectional area of 20% or more. Thus, the average B content at the surface of the steel wire for bolts to that in the inside thereof is reduced, while a difference between the maximum value and the minimum value of the average B content can be decreased, thus making the B content uniform. Alternatively, spheroidizing annealing can be performed under appropriate temperature and time. In this case, the annealing can be carried out under any furnace atmosphere that neither causes excessive decarburization nor carburization as appropriate.

(Heating temperature: 650 to 800°C)

A heating temperature before the wire-drawing is set to 650 to 800°C. If the above-mentioned heating temperature is extremely low, the amount of removed boron becomes insufficient, leading to a reduced B content at the surface, degrading the delayed fracture resistance. Thus, the lower limit of the heating temperature is set to 650°C or higher. The lower limit of the heating temperature is preferably 680°C or higher, and more preferably 700°C or higher. In contrast, if the heating temperature is extremely high, the decarburization is promoted to reduce the carbides of Ti, Nb, and the like, thus coarsening the crystal grains, and reducing the hardness of a superficial layer of the steel wire for bolts. Thus, the upper limit of the heating temperature is set to 800°C or lower. The upper limit of heating temperature is preferably 780°C or lower, and more preferably 760°C or lower.

(Heating time: 3.0 to 24 hours)

Furthermore, the heating time before the wire-drawing is set to 3.0 to 24 hours. If the above-mentioned heating time is extremely low, the amount of removed boron becomes insufficient, leading to a reduced B content at the surface, degrading the delayed fracture resistance. Thus, the lower limit of the heating time is set to 3.0 hour or more. The lower limit of the heating time is preferably 6 hours or more. In contrast, if the heating time is extremely long, the decarburization is promoted to reduce the carbides of Ti, Nb, and the like, thus coarsening the crystal grains, and reducing the hardness of a superficial layer of the steel wire for bolts . Thus, the upper limit of the heating time is set to 24 hours or less. The upper limit of the heating time is preferably 18 hours or less, and more preferably 10 hours or less.

Note that instead of heating before the wire-drawing process, the spheroidizing annealing can be performed. Specifically, the spheroidizing annealing can be executed, for example, under the following conditions. The annealing can be carried out under any furnace atmosphere that neither causes excessive decarburization nor carburization as appropriate. However, the furnace atmosphere is preferably controlled to be, for example, a mixed atmosphere of carbon dioxide gas and carbon monoxide gas, or a nitrogen atmosphere.

Soaking temperature: 700 to 850°C
Soaking time: 1 to 24 hours
pF value in the furnace: 0 to 200
Cooling rate after soaking: 5 to 20°C/Hr
Extraction temperature: 650 to 800°C

Note that the term "extraction temperature" mentioned above means a temperature when the wire material is removed out of a heat-treatment furnace. The term "pF value" mentioned above means a value in units of % by volume that is defined by the ratio of the square of CO concentration (%) to the $CO_2$ concentration (%) in the furnace atmosphere gas as indicated by the following formula.

$$pF = (CO)^2/CO_2$$

(Reduction rate of the cross-sectional area: 23% or more)

The reduction rate of the cross-sectional area during the wire-drawing process is set at 23% or more. When the reduction rate of the cross-sectional area during the wire-drawing process is extremely small, the B content sometimes remains non-uniform at the surface of the steel wire for bolts even though the B content at the surface is reduced by the heat treatment, leading to the degradation in the delayed fracture resistance. The lower limit of the reduction rate of the cross-sectional area is preferably 25% or more. On the other hand, the upper limit of the reduction rate of the cross-sectional area is not specifically limited. However, in terms of the productivity, the upper limit of the reduction rate of the cross-sectional area is preferably 40% or less. The above-mentioned reduction rate of the cross-sectional area of the steel wire is determined by the following formula:

```
      Reduction rate of the cross-sectional area during the
  wire-drawing process = {(cross-sectional area of wire material
  – cross-sectional area of steel wire for bolt)/(cross-sectional
  area of wire material)} × 100 (%)
```

In the steel wire for bolts obtained in this way, the B content at the surface of the steel wire for bolts is 75% or less on average relative to the B content in the inside thereof, and a difference between the maximum value and the minimum value of the B content at the surface of the steel wire for bolts 25% or less. Thus, the B content is made uniform, and the number of B-containing compounds serving as the starting point of the delayed fracture is reduced, resulting in excellent delayed fracture resistance.
A method of manufacturing a bolt in the present invention will be described below.

The bolt of the present invention is obtained by hot-heading the steel wire for bolts into the shape of a head-formed product. As mentioned above, the manufacture of the bolt in the present invention can employ the following methods (i) to (iii):

(i) the steel wire for bolts obtained by the wire-drawing step mentioned above is used;
(ii) a steel wire for bolts not subjected to the above-mentioned wire-drawing process is used while controlling the heating conditions in a hot-heading step of forming the wire into the shape of a head-formed product, as well as the reduction rate of the cross-sectional area thereafter; and
(iii) both the conditions (i) and (ii) are used.

Each method will be described below. Note that since the above method (iii) employs both the methods (i) and (ii), its description will be omitted.

The details of the method (i) has been mentioned above. In the present invention, by the use of the steel wire for bolts obtained by the above method (i), the requirements to the steel wire for bolts (B content at the surface and prior austenite crystal grain size number) can be maintained in the head-formed product, regardless of the conditions for the hot-heading process thereafter. Thus, the bolt satisfying the same requirement as that of the steel wire for bolts can be obtained.

The above method (ii) will be described in detail below.

(Hot-heading step into the shape of the head-formed product)

The hot-heading step is controlled such that the reduction rate of the cross-sectional area of the shank portion of the head-formed product to the steel wire for bolt is 10% or more after the steel wire for bolts is heated at 800 to 950°C for 10 to 60 minutes. Thus, the average B content at the surface of the steel wire for bolts is reduced with respect to that in the inside thereof , even though the B content and the like at the surface of the steel wire for bolts is not controlled appropriately, while a difference between the maximum value and the minimum value of the average B content can be decreased, thus making the B content uniform.

(Heating temperature: 800 to 950°C)

The heating temperature in the hot-heading step is set in a range of 800 to 950°C. If the above-mentioned heating temperature is extremely low, the amount of removed boron becomes insufficient, leading to a reduced B content at the surface, and resulting in non-uniform B content at the surface. Thus, the delayed fracture resistance would deteriorate. The lower limit of the heating temperature is set at 800°C or higher. The lower limit of the heating temperature is preferably 840°C or higher, and more preferably 860°C or higher. In contrast, if the heating temperature is extremely high, the prior austenite crystal grains are coarsened, and the hardness of the superficial layer of the bolt is reduced. Thus, the upper limit of the heating temperature is set at 950°C or lower. The upper limit of heating temperature is preferably 930°C or lower, and more preferably 900°C or lower.

(Heating time: 10 to 60 minutes)

The heating time in the hot-heading step is set in a range of 10 to 60 minutes. If the above-mentioned heating time is extremely low, the amount of removed boron becomes insufficient, whereby the B content at the surface of the bolt is not reduced, thus degrading the delayed fracture resistance. Thus, the lower limit of the heating time is set to 10 minutes or more. The lower limit of heating time is preferably 15 minutes or more, and more preferably 25 minutes or more. In contrast, if the heating temperature is extremely long, the prior austenite crystal grains are coarsened, and the hardness of the superficial layer of the bolt is reduced. Thus, the upper limit of the heating time is set at 60 minutes or less. The upper limit of heating time is preferably 45 minutes or less, and more preferably 35 minutes or less.

(Reduction rate of the cross-sectional area: 10% or more)

The reduction rate of the cross-sectional area of the head-formed product is 10% or more relative to the steel wire for bolts. When the reduction rate of the cross-sectional area is extremely small, the B content remains non-uniform at the surface of the bolt even though the B content at the surface is reduced by the heat treatment, resulting in the degradation of the delayed fracture resistance in some cases. The lower limit of the reduction rate of the cross-sectional area is preferably 13% or more, and more preferably 15% or more. Note that the upper limit of the reduction rate of the cross-sectional area is not specifically limited. However, when the reduction rate is extremely high, the lifetime of a die can become deteriorated. Thus, the upper limit of the reduction rate is preferably 40% or less in terms of the practical use. The above-mentioned reduction rate of the cross-sectional area is determined by the following formula:

$$\text{Reduction rate of the cross-sectional area during the head-formed process} = \{(\text{cross-sectional area of the steel wire for bolts} - \text{cross-sectional area of the shank portion of the head-formed product})/(\text{cross-sectional area of the steel wire for bolts})\} \times 100 \ (\%)$$

It is recommended that the head-formed product obtained by any of the above-mentioned methods (i) to (iii) is quenched as it is, and tempered as needed.

Here, it is also recommended that the above-mentioned quenching method is not specifically limited, but the composition of the present invention should be quenched, for example, in oil at room temperature.

The conditions for the above-mentioned tempering process performed as needed are not specifically limited. However, particularly, to ensure the tensile strength of 1,000 to 1,400 MPa, the following conditions for the tempering process are preferably employed.

Tempering temperature: 360 to 550°C
Tempering time: 20 to 100 minutes

Then, the head-formed product is formed by cold-heading into the shape of a bolt, and then thread-rolling is performed to form a threaded part, thereby producing a bolt. Furthermore, for the purpose of the tempering, the heat treatment may be performed under predetermined conditions before or after thread-rolling of the threaded part. The above-mentioned forming step and thread-rolling step are not specifically limited and may be set arbitrarily. The above-mentioned heating treatment is not specifically limited, but the heating is preferably performed, for example, in the following manner.

Tempering temperature: 360 to 550°C
Tempering time: 20 to 100 minutes

In the bolt obtained in this way, the B content at the surface of the bolt is 75% or less on average relative to the B content in the inside of the bolt, and a difference between the maximum value and the minimum value of the B content at the surface of the bolt is 25% or less, making the C content uniform. Thus, the number of B-containing compounds serving as the starting point of the delayed fracture is small, resulting in excellent delayed fracture resistance.

The present application claims priority on Japanese Patent Application No. 2013-249563 filed on December 2, 2013, the disclosure of which is incorporated by reference herein.

Examples

The present invention will be more specifically described below by way of Examples, but is not limited to the following Examples. Various modifications and changes can be made to these examples as long as they are adaptable to the above-mentioned and below-mentioned concepts and are included within the technical scope of the present invention.

Steel types A to Z shown in Table 1 below were smelted, and then produced into billets each having a square cross-sectional shape with one side of 155 mm. Note that the term "tr." in Table 1 indicates a value of less than the analytical limit for each element. Thereafter, each billet was formed into a wire material (step 1), the wire material was formed into a steel wire for bolts (step 2), the steel wire for bolts was formed into the shape of a head-formed product (step 3), and the head-formed product was formed into a bolt (step 4). As a result, various types of flange bolts (with a tensile strength of 1,000 to 1,400 MPa, M10 to 14 (coarse thread), length of 60 mmL) were fabricated. The basic conditions for the above-mentioned steps 1 to 4 are shown in Tables 2 to 5. In detail, the conditions for the steps 1 and 2 are shown in Tables 2 and 4, and the conditions for the steps 3 and 4 are shown in Tables 3 and 5.

Regarding the steps 1 to 4, the conditions other than those shown in Tables 2 to 5 mentioned above will be explained below.

(Processing a billet into a wire material: step 1)

In addition to the heating temperature before a rolling process, heating time, and the reduction rate of the cross-sectional area during the rolling process as shown in Tables 2 and 4, the temperature in the rolling process was set to 750 to 1,100°C. This step was managed by handling the heating temperature before the rolling process by means of a temperature when taking out the billet from a heating furnace; the heating time by means of a time period during which the billet was present in the heating furnace; and the temperature in the rolling process by means of a surface temperature in the final finish rolling process . Note that the reduction rate of the cross-sectional area in step 1 is a value determined by the following formula.

$$\text{Reduction rate of the cross-sectional area during}$$
$$\text{processing into the wire material} = \{(\text{cross-sectional area of}$$
$$\text{billet} - \text{cross-sectional area of wire material}) / (\text{cross-sectional}$$
$$\text{area of billet})\} \times 100 ~(\%)$$

(Processing the wire material into a steel wire for bolts: step 2)

In the process for forming the wire material into a steel wire for bolts, the wire material was pickled to remove scales, and heated at the heating temperature for the heating time as shown in Tables 2 and 4, followed by wire-drawing. After the drawn wire material was pickled again to remove scales, followed by applying a lubricating coating treatment thereto, the coated wire material was further drawn at a predetermined reduction rate of the cross-sectional area into the steel wire. The column "process type" in Tables 2 and 4 indicates the order of undertaking the processes. For example, the term "heat treatment → wire-drawing" indicates an example of performing wire-drawing after a heat treatment; the term "wire-drawing → heat treatment" indicates an example of applying a heat treatment after wire-drawing; and the term "wire-drawing only" indicates an example of performing a wire-drawing process without a heat treatment. Note that in step 2, the column "implementation" in Tables 2 and 4 shows "Pass" when the conditions defined by the present invention were satisfied, as well as "Fail" when at least one of the conditions was not satisfied.

(Processing the steel wire for bolts into the shape of a head-formed product: step 3)

In the forming process of the steel wire for bolts into a head-formed product, the steel wire for bolts was heated at the heating temperature for the heating time as shown in Tables 3 and 5, and then subjected to hot heading using a part former to form a hexagon flange. In the examples in which the heating temperature and the heating time shown in Tables 3 and 5 are designated by "-", the hexagon flange was formed by cold forging. In some experiments No. 14 to 16, a drawing process was applied to the shank portion of the head-formed product to decrease the cross-sectional area of the shank portion of the head-formed product with respect to that of the steel wire for bolts. Note that in step 3, the column "implementation" in Tables 3 and 5 shows "Pass" for the example in which the conditions defined by the present invention were satisfied, as well as "Fail" for the example in which at least one of the conditions was not satisfied.

(Processing the head-formed product into a bolt: step 4)

In the forming process of the head-formed product into a bolt, the head-formed product was heated at the heating temperature for the heating time shown in Tables 3 and 5, and then quickly cooled to perform quenching, followed by tempering at a predetermined temperature, and then the head-formed product was subjected to thread-rolling, thereby producing the bolt. The column "process type" in Tables 3 and 5 indicates the order of undertaking the processes. For example, the term "heat treatment → thread-rolling" indicates an example of performing thread-rolling after quenching and tempering; and the term "thread-rolling → heat treatment" indicates an example of quenching and tempering after the thread-rolling.

[Table 1]

| Steel type | Chemical composition [% by mass] The balance consisting of iron and inevitable impurities | | | | | | | | | | | |
|---|---|---|---|---|---|---|---|---|---|---|---|---|
| | C | Si | Mn | P | S | Cr | Ti | Nb | Al | B | N | Others |
| A | 0.23 | 0.23 | 0.91 | 0.011 | 0.015 | 0.15 | 0.026 | tr. | 0.027 | 0.0014 | 0.0042 | |
| B | 0.28 | 0.10 | 0.87 | 0.015 | 0.015 | 0.40 | 0.055 | tr. | 0.031 | 0.0014 | 0.0029 | |
| C | 0.25 | 0.07 | 1.08 | 0.012 | 0.007 | 0.28 | 0.045 | tr. | 0.032 | 0.0017 | 0.0042 | |
| D | 0.27 | 0.02 | 0.55 | 0.005 | 0.003 | 0.74 | 0.032 | tr. | 0.038 | 0.0016 | 0.0051 | |
| E | 0.26 | 0.19 | 1.07 | 0.014 | 0.006 | 0.14 | 0.024 | tr. | 0.024 | 0.0018 | 0.0034 | |
| F | 0.21 | 0.21 | 0.79 | 0.013 | 0.007 | 0.76 | 0.041 | tr. | 0.053 | 0.0017 | 0.0043 | |
| G | 0.34 | 0.03 | 1.02 | 0.010 | 0.009 | 0.50 | tr. | 0.050 | 0.035 | 0.0014 | 0.0083 | Cu = 0.10, Ni = 0.15 |
| H | 0.25 | 0.48 | 0.90 | 0.013 | 0.011 | 0.35 | tr. | 0.031 | 0.050 | 0.0018 | 0.0030 | Sn = 0.25 |
| I | 0.34 | 0.05 | 0.50 | 0.017 | 0.014 | 1.48 | 0.050 | tr. | 0.030 | 0.0015 | 0.0059 | Mo = 0.25 |
| J | 0.25 | 0.12 | 1.43 | 0.010 | 0.011 | 0.30 | tr. | 0.030 | 0.035 | 0.0020 | 0.0035 | Cu = 0.23 |
| K | 0.28 | 0.01 | 0.81 | 0.007 | 0.005 | 0.51 | 0.025 | 0.026 | 0.081 | 0.0012 | 0.0062 | Ni = 0.40 |
| L | 0.24 | 0.10 | 0.82 | 0.014 | 0.015 | 0.23 | 0.071 | tr. | 0.025 | 0.0015 | 0.0040 | Mg = 0.0025 |
| M | 0.28 | 0.08 | 0.51 | 0.010 | 0.012 | 0.51 | 0.035 | 0.021 | 0.033 | 0.0018 | 0.0045 | Ca = 0.0032 |
| N | 0.25 | 0.10 | 0.93 | 0.008 | 0.010 | 0.47 | tr. | 0.067 | 0.037 | 0.0020 | 0.0068 | V = 0.15 |
| O | 0.28 | 0.04 | 1.02 | 0.012 | 0.013 | 0.75 | tr. | 0.055 | 0.081 | 0.0019 | 0.0061 | Zr = 0.035 |
| P | 0.32 | 0.13 | 0.35 | 0.015 | 0.014 | 1.22 | 0.040 | tr. | 0.060 | 0.0023 | 0.0039 | W = 0.034 |
| Q | 0.42 | 0.10 | 0.35 | 0.015 | 0.013 | 0.23 | tr. | 0.031 | 0.029 | 0.0018 | 0.0041 | |
| R | 0.14 | 0.15 | 1.21 | 0.013 | 0.012 | 0.33 | 0.051 | tr. | 0.031 | 0.0015 | 0.0050 | |
| T | 0.21 | 0.08 | 0.11 | 0.017 | 0.016 | 0.81 | 0.064 | tr. | 0.063 | 0.0021 | 0.0043 | |
| U | 0.31 | 0.10 | 1.83 | 0.003 | 0.005 | 0.41 | tr. | 0.051 | 0.052 | 0.0020 | 0.0038 | |
| V | 0.33 | 0.05 | 0.53 | 0.032 | 0.013 | 0.35 | tr. | 0.060 | 0.034 | 0.0014 | 0.0031 | |
| W | 0.22 | 0.31 | 0.91 | 0.007 | 0.035 | 0.79 | tr. | 0.075 | 0.030 | 0.0025 | 0.0040 | |
| X | 0.27 | 0.21 | 0.85 | 0.015 | 0.017 | 0.03 | 0.073 | tr. | 0.025 | 0.0019 | 0.0045 | |
| Y | 0.25 | 0.10 | 0.76 | 0.019 | 0.017 | 0.81 | tr. | tr. | 0.028 | 0.0020 | 0.0013 | |

(continued)

| Steel type | Chemical composition [% by mass] The balance consisting of iron and inevitable impurities | | | | | | | | | | | | |
| | C | Si | Mn | P | S | Cr | Ti | Nb | Al | B | N | Others |
| Z | 0.28 | 0.15 | 1.10 | 0.015 | 0.013 | 0.18 | 0.045 | 0.023 | 0.030 | 0.0018 | 0.0045 | |

[Table 2]

| Sample No. | Steel type | Step 1 (Billet → Wire material) | | | | | Step 2 (Wire material → Steel wire) | | | | | | Implementation |
|---|---|---|---|---|---|---|---|---|---|---|---|---|---|
| | | Heating temperature before rolling [°C] | Heating time [Hr] | Billet (One side) [mm] | Wire-material diameter [mm] | Reduction rate of cross-sectional area [%] | Process type | Heating temperature [°C] | Heating time [Hr] | Wire-material diameter [mm] | Steel-wire diameter [mm] | Reduction rate of cross-sectional area [%] | |
| 1 | A | 1,000 | 4 | 155 | 14.3 | 99.3 | Heat treatment → Wire-drawing | 760 | 4 | 14.3 | 12.0 | 29.6 | Pass |
| 2 | A | 1,250 | 4 | 155 | 15.2 | 99.2 | Heat treatment → Wire-drawing | 760 | 8 | 15.2 | 13.0 | 26.9 | Pass |
| 3 | A | 1,250 | 4 | 155 | 15.2 | 99.2 | Wire-drawing only | - | - | 15.2 | 14.0 | 15.2 | Fail |
| 4 | A | 1,250 | 4 | 155 | 14.3 | 99.3 | Heat treatment → Wire-drawing | 760 | 4 | 14.3 | 12.0 | 29.6 | Pass |
| 5 | A | 1,250 | 4 | 155 | 13.0 | 99.4 | Heat treatment → Wire-drawing | 760 | 4 | 12.5 | 11.0 | 22.6 * | Pass |
| 6 | B | 900 | 8 | 155 | 12.0 | 99.5 | Heat treatment → Wire-drawing | 760 | 4 | 12.0 | 10.0 | 30.6 | Pass |
| 7 | B | 1,250 | 4 | 155 | 13.0 | 99.4 | Heat treatment → Wire-drawing | 780 | 12 | 13.0 | 11.0 | 28.4 | Pass |

| Sample No. | Steel type | Step 1 (Billet → Wire material) | | | | | Step 2 (Wire material → Steel wire) | | | | | | Implementation |
|---|---|---|---|---|---|---|---|---|---|---|---|---|---|
| | | Heating temperature before rolling [°C] | Heating time [Hr] | Billet (One side) [mm] | Wire-material diameter [mm] | Reduction rate of cross-sectional area [%] | Process type | Heating temperature [°C] | Heating time [Hr] | Wire-material diameter [mm] | Steel-wire diameter [mm] | Reduction rate of cross-sectional area [%] | |
| 8 | C | 1,250 | 4 | 155 | 13.0 | 99.4 | Wire-drawing only | - | - | 13.0 | 11.8 | 17.6 | Fail |
| 9 | C | 1,250 | 4 | 155 | 12.0 | 99.5 | Heat treatment → Wire-drawing | 760 | 4 | 12.0 | 10.0 | 30.6 | Pass |
| 10 | D | 1,100 | 1 | 155 | 12.0 | 99.5 | Heat treatment → Wire-drawing | 760 | 4 | 12.0 | 10.0 | 30.6 | Pass |
| 11 | D | 1,000 | 9 | 155 | 12.0 | 99.5 | Heat treatment → Wire-drawing | 760 | 4 | 12.0 | 10.0 | 30.6 | Pass |
| 12 | E | 750 | 4 | 155 | 10.5 | 99.6 | Heat treatment → Wire-drawing | 780 | 3 | 10.5 | 9.0 | 26.5 | Pass |
| 13 | E | 1,250 | 4 | 155 | 10.5 | 99.6 | Heat treatment → Wire-drawing | 670 | 6 | 10.5 | 9.0 | 26.5 | Pass |
| 14 | F | 1,250 | 4 | 155 | 10.0 | 99.7 | Heat treatment → Wire-drawing | 760 | 4 | 10.0 | 8.0 | 36.0 | Pass |

EP 3 078 758 B1

| Sample No. | Steel type | Step 1 (Billet → Wire material) | | | | | Step 2 (Wire material → Steel wire) | | | | | | Implementation |
|---|---|---|---|---|---|---|---|---|---|---|---|---|---|
| | | Heating temperature before rolling [°C] | Heating time [Hr] | Billet (One side) [mm] | Wire-material diameter [mm] | Reduction rate of cross-sectional area [%] | Process type | Heating temperature [°C] | Heating time [Hr] | Wire-material diameter [mm] | Steel-wire diameter [mm] | Reduction rate of cross-sectional area [%] | |
| 15 | F | 1,250 | 4 | 155 | 10.0 | 99.7 | Heat treatment → Wire-drawing | 760 | 4 | 10.0 | 8.0 | 36.0 | Pass |
| 16 | G | 1,000 | 8 | 155 | 12.0 | 99.5 | Heat treatment → Wire-drawing | 760 | 4 | 12.0 | 10.0 | 30.6 | Pass |
| 17 | H | 1,100 | 1 | 155 | 22.0 | 98.4 | Heat treatment → Wire-drawing | 760 | 8 | 22.0 | 18.0 | 33.1 | Pass |
| 18 | I | 1,250 | 4 | 155 | 13.0 | 99.4 | Heat treatment → Wire-drawing | 700 | 20 | 13.0 | 11.0 | 28.4 | Pass |
| 19 | J | 1,300 | 2 | 155 | 13.5 | 99.4 | Heat treatment → Wire-drawing | 800 | 5 | 13.5 | 11.0 | 33.6 | Pass |
| 20 | K | 1,000 | 6 | 155 | 13.0 | 99.4 | Heat treatment → Wire-drawing | 760 | 15 | 13.0 | 11.0 | 28.4 | Pass |
| 21 | L | 1,000 | 8 | 155 | 13.0 | 99.4 | Heat treatment → Wire-drawing | 760 | 4 | 13.0 | 11.0 | 28.4 | Pass |

EP 3 078 758 B1

| Sample No. | Steel type | Step 1 (Billet → Wire material) | | | | | Step 2 (Wire material → Steel wire) | | | | | | Implementation |
|---|---|---|---|---|---|---|---|---|---|---|---|---|---|
| | | Heating temperature before rolling [°C] | Heating time [Hr] | Billet (One side) [mm] | Wire-material diameter [mm] | Reduction rate of cross-sectional area [%] | Process type | Heating temperature [°C] | Heating time [Hr] | Wire-material diameter [mm] | Steel-wire diameter [mm] | Reduction rate of cross-sectional area [%] | |
| 22 | M | 1,250 | 4 | 155 | 13.0 | 99.4 | Heat treatment → Wire-drawing | 760 | 4 | 13.0 | 11.0 | 28.4 | Pass |
| 23 | N | 1,250 | 2 | 155 | 15.2 | 99.2 | Heat treatment → Wire-drawing | 760 | 4 | 15.2 | 12.3 | 34.5 | Pass |
| 24 | O | 1,050 | 3 | 155 | 14.0 | 99.4 | Heat treatment → Wire-drawing | 760 | 10 | 14.0 | 11.8 | 29.0 | Pass |
| 25 | P | 1,050 | 3 | 155 | 13.0 | 99.4 | Heat treatment → Wire-drawing | 760 | 10 | 13.0 | 11.0 | 28.4 | Pass |

* Sample No. 5 represents a comparative example.

[Table 3]

| Sample No. | Steel type | Step 3 (Steel wire →Head-formed product) | | | | | | Step 4 (Head-formed product → Bolt) | | | Bolt size |
|---|---|---|---|---|---|---|---|---|---|---|---|
| | | Heating temperature [°C] | Heating time [min] | Steel-wire diameter [mm] | Shank diameter [mm] | Reduction rate of cross-sectional area [%] | Implementation | Process type | Heating temperature [°C] | Heating time [°C] | |
| 1 | A | - | - | 12.0 | 11.0 | 16.0 | Fail | Thread-rolling → Heat treatment | 860 | 30 | M12 |
| 2 | A | - | - | 13.0 | 13.0 | 0.0 | Fail | Thread-rolling → Heat treatment | 860 | 30 | M14 |
| 3 | A | 860 | 20 | 14.0 | 13.0 | 13.8 | Pass | Thread-rolling → Heat treatment | 860 | 30 | M14 |
| 4 | A | - | - | 12.0 | 11.0 | 16.0 | Fail | Heat treatment → Thread-rolling | 860 | 30 | M12 |
| 5 | A | - | - | 11.0 | 11.0 | 0.0 | Fail | Thread-rolling → Heat treatment | 860 | 30 | M12 |
| 6 | B | - | - | 10.0 | 9.0 | 19.0 | Fail | Thread-rolling → Heat treatment | 880 | 40 | M10 |
| 7 | B | - | - | 11.0 | 11.0 | 0.0 | Fail | Thread-rolling → Heat treatment | 880 | 40 | M12 |

EP 3 078 758 B1

19

| Sample No. | Steel type | Step 3 (Steel wire →Head-formed product) | | | | | | Step 4 (Head-formed product → Bolt) | | | Bolt size |
|---|---|---|---|---|---|---|---|---|---|---|---|
| | | Heating temperature [°C] | Heating time [min] | Steel-wire diameter [mm] | Shank diameter [mm] | Reduction rate of cross-sectional area [%] | Implementation | Process type | Heating temperature [°C] | Heating time [°C] | |
| 8 | C | 880 | 30 | 11.8 | 11.0 | 13.1 | Pass | Thread-rolling → Heat treatment | 880 | 40 | M12 |
| 9 | C | - | - | 10.0 | 9.0 | 19.0 | Fail | Heat treatment → Thread-rolling | 880 | 30 | M10 |
| 10 | D | - | - | 10.0 | 9.0 | 19.0 | Fail | Thread-rolling → Heat treatment | 880 | 30 | M10 |
| 11 | D | - | - | 10.0 | 9.0 | 19.0 | Fail | Thread-rolling → Heat treatment | 880 | 30 | M10 |
| 12 | E | - | - | 9.0 | 9.0 | 0.0 | Fail | Thread-rolling → Heat treatment | 880 | 30 | M10 |
| 13 | E | - | - | 9.0 | 9.0 | 0.0 | Fail | Thread-rolling → Heat treatment | 880 | 30 | M10 |
| 14 | F | - | - | 8.0 | 9.0 | -26.6 | Fail | Heat treatment → Thread-rolling | 850 | 60 | M8 |

EP 3 078 758 B1

| Sample No. | Steel type | Step 3 (Steel wire →Head-formed product) | | | | | | Step 4 (Head-formed product → Bolt) | | | Bolt size |
|---|---|---|---|---|---|---|---|---|---|---|---|
| | | Heating temperature [°C] | Heating time [min] | Steel-wire diameter [mm] | Shank diameter [mm] | Reduction rate of cross-sectional area [%] | Implementation | Process type | Heating temperature [°C] | Heating time [°C] | |
| 15 | F | - | - | 8.0 | 9.0 | -26.6 | Fail | Heat treatment → Thread-rolline | 930 | 10 | M8 |
| 16 | G | - | - | 10.0 | 11.0 | -21.0 | Fail | Thread-rolling → Heat treatment | 900 | 30 | M10 |
| 17 | H | - | - | 18.0 | 17.0 | 10.8 | Fail | Thread-rolling → Heat treatment | 900 | 30 | M18 |
| 18 | I | - | - | 11.0 | 11.0 | 0.0 | Fail | Thread-rolling → Heat treatment | 900 | 30 | M12 |
| 19 | J | - | - | 11.0 | 11.0 | 0.0 | Fail | Thread-rolling → Heat treatment | 900 | 30 | M12 |
| 20 | K | - | - | 11.0 | 11.0 | 0.0 | Fail | Thread-rolling → Heat treatment | 900 | 30 | M12 |
| 21 | L | - | - | 11.0 | 11.0 | 0.0 | Fail | Heat treatment → Thread-rolling | 880 | 20 | M12 |

EP 3 078 758 B1

| Sample No. | Steel type | Step 3 (Steel wire → Head-formed product) | | | | | | Step 4 (Head-formed product → Bolt) | | | Bolt size |
|---|---|---|---|---|---|---|---|---|---|---|---|
| | | Heating temperature [°C] | Heating time [min] | Steel-wire diameter [mm] | Shank diameter [mm] | Reduction rate of cross-sectional area [%] | Implementation | Process type | Heating temperature [°C] | Heating time [°C] | |
| 22 | M | - | - | 11.0 | 10.0 | 17.4 | Fail | Heat treatment → Thread-rolling | 900 | 10 | M10 |
| 23 | N | - | - | 12.3 | 11.0 | 20.0 | Fail | Heat treatment → Thread-rolling | 920 | 45 | M12 |
| 24 | O | 900 | 10 | 11.8 | 11.0 | 13.1 | Pass | Thread-rolling → Heat treatment | 880 | 30 | M12 |
| 25 | P | - | - | 11.0 | 11.0 | 0.0 | Fail | Heat treatment → Thread-rolling | 880 | 30 | M12 |

EP 3 078 758 B1

[Table 4]

| Sample No. | Steel type | Step 1 (Billet → Wire material) | | | | | Step 2 (Wire material → Steel wire) | | | | | | Implementation |
|---|---|---|---|---|---|---|---|---|---|---|---|---|---|
| | | Heating temperature before rolling [°C] | Heating time [Hr] | Billet (One side) [mm] | Wire-material diameter [mm] | Reduction rate of cross-sectional area [%] | Process type | Heating temperature [°C] | Heating time [Hr] | Wire-material diameter [mm] | Steel-wire diameter [mm] | Reduction rate of cross-sectional area [%] | |
| 26 | A | 850 | 12 | 155 | 13.0 | 99.4 | Heat treatment → Wire-drawing | 600 | 20 | 13.0 | 11.0 | 28.4 | Fail |
| 27 | B | 850 | 12 | 155 | 13.0 | 99.4 | Heat treatment → Wire-drawing | 850 | 2 | 13.0 | 11.0 | 28.4 | Fail |
| 28 | C | 850 | 12 | 155 | 13.0 | 99.4 | Heat treatment → Wire-drawing | 740 | 0.5 | 13.0 | 11.0 | 28.4 | Fail |
| 29 | D | 850 | 12 | 155 | 13.0 | 99.4 | Heat treatment → Wire-drawing | 740 | 30 | 13.0 | 11.0 | 28.4 | Fail |
| 30 | E | 850 | 12 | 155 | 12 | 99.5 | Heat treatment → Wire-drawing | 740 | 5 | 12.0 | 11.0 | 16.0 | Fail |
| 31 | F | 850 | 12 | 155 | 8.3 | 99.8 | Wire-drawing →Heat treatment | 760 | 6 | 8.3 | 7.0 | 28.9 | Fail |
| 32 | A | 850 | 12 | 155 | 15.0 | 99.3 | Wire-drawing only | - | - | 15.0 | 14.0 | 12.9 | Fail |

EP 3 078 758 B1

23

| Sample No. | Steel type | Step 1 (Billet → Wire material) | | | | | Step 2 (Wire material → Steel wire) | | | | | | Implementation |
|---|---|---|---|---|---|---|---|---|---|---|---|---|---|
| | | Heating temperature before rolling [°C] | Heating time [Hr] | Billet (One side) [mm] | Wire-material diameter [mm] | Reduction rate of cross-sectional area [%] | Process type | Heating temperature [°C] | Heating time [Hr] | Wire-material diameter [mm] | Steel-wire diameter [mm] | Reduction rate of cross-sectional area [%] | |
| 33 | B | 850 | 12 | 155 | 15.0 | 99.3 | Wire-drawing only | - | - | 15.0 | 14.0 | 12.9 | Fail |
| 34 | C | 850 | 12 | 155 | 15.0 | 99.3 | Wire-drawing only | - | - | 15.0 | 14.0 | 12.9 | Fail |
| 35 | D | 850 | 12 | 155 | 15.0 | 99.3 | Wire-drawing only | - | - | 15.0 | 14.0 | 12.9 | Fail |
| 36 | E | 850 | 12 | 155 | 14.0 | 99.4 | Wire-drawing only | - | - | 14.0 | 13.5 | 7.0 | Fail |
| 37 | Q | 1,100 | 6 | 155 | 12.0 | 99.5 | Heat treatment → Wire-drawing | 760 | 4 | 12.0 | 10.0 | 30.6 | Pass |
| 38 | R | 1,000 | 8 | 155 | 12.0 | 99.5 | Heat treatment → Wire-drawing | 760 | 4 | 12.0 | 10.0 | 30.6 | Pass |
| 39 | T | 850 | 12 | 155 | 13.0 | 99.4 | Heat treatment → Wire-drawing | 760 | 6 | 13.0 | 11.0 | 28.4 | Pass |

EP 3 078 758 B1

24

| Sample No. | Steel type | Step 1 (Billet → Wire material) | | | | | Step 2 (Wire material → Steel wire) | | | | | | Implementation |
|---|---|---|---|---|---|---|---|---|---|---|---|---|---|
| | | Heating temperature before rolling [°C] | Heating time [Hr] | Billet (One side) [mm] | Wire-material diameter [mm] | Reduction rate of cross-sectional area [%] | Process type | Heating temperature [°C] | Heating time [Hr] | Wire-material diameter [mm] | Steel-wire diameter [mm] | Reduction rate of cross-sectional area [%] | |
| 40 | U | 850 | 12 | 155 | 13.0 | 99.4 | Heat treatment → Wire-drawing | 760 | 6 | 13.0 | 12.0 | 14.8 | Fail |
| 41 | V | 850 | 12 | 155 | 13.0 | 99.4 | Heat treatment → Wire-drawing | 760 | 6 | 13.0 | 12.0 | 14.8 | Fail |
| 42 | W | 850 | 12 | 155 | 12.0 | 99.5 | Heat treatment → Wire-drawing | 760 | 4 | 12.0 | 10.0 | 30.6 | Pass |
| 43 | X | 850 | 12 | 155 | 12.0 | 99.5 | Heat treatment → Wire-drawing | 760 | 4 | 12.0 | 10.0 | 30.6 | Pass |
| 44 | Y | 1100 | 6 | 155 | 15.5 | 99.2 | Heat treatment → Wire-drawing | 760 | 6 | 15.5 | 13.0 | 29.7 | Pass |
| 45 | Z | 1250 | 4 | 155 | 13.0 | 99.4 | Heat treatment → Wire-drawing | 780 | 12 | 13.0 | 11.0 | 28.4 | Pass |

EP 3 078 758 B1

[Table 5]

| Sample No. | Steel type | Step 3 (Steel wire → Head-formed product) | | | | | | Step 4 (Head-formed product → Bolt) | | | |
| | | Heating temperature [°C] | Heating time [min] | Steel-wire diameter [mm] | Shank diameter [mm] | Reduction of rate cross-sectional area [%] | Implementation | Process type | Heating temperature [°C] | Heating time [°C] | Bolt size |
|---|---|---|---|---|---|---|---|---|---|---|---|
| 26 | A | - | - | 11.0 | 11.0 | 0.0 | Fail | Thread-rolling → Heat treatment | 860 | 40 | M12 |
| 27 | B | - | - | 11.0 | 11.0 | 0.0 | Fail | Thread-rolling → Heat treatment | 880 | 30 | M12 |
| 28 | C | - | - | 11.0 | 11.0 | 0.0 | Fail | Thread-rolling → Heat treatment | 880 | 30 | M12 |
| 29 | D | - | - | 11.0 | 11.0 | 0.0 | Fail | Thread-rolling → Heat treatment | 890 | 40 | M12 |
| 30 | E | - | - | 11.0 | 11.0 | 0.0 | Fail | Thread-rolling → Heat treatment | 880 | 30 | M12 |
| 31 | F | - | - | 7.0 | 7.0 | 0.0 | Fail | Thread-rolling → Heat treatment | 880 | 30 | M8 |
| 32 | A | 780 | 40 | 14.0 | 13.0 | 13.8 | Fail | Thread-rolling → Heat treatment | 860 | 40 | M14 |

(continued)

| Sample No. | Steel type | Step 3 (Steel wire →Head-formed product) | | | | | | Step 4 (Head-formed product → Bolt) | | | Bolt size |
| --- | --- | --- | --- | --- | --- | --- | --- | --- | --- | --- | --- |
| | | Heating temperature [°C] | Heating time [min] | Steel-wire diameter [mm] | Shank diameter [mm] | Reduction of rate cross-sectional area [%] | Implementation | Process type | Heating temperature [°C] | Heating time [°C] | |
| 33 | B | 980 | 20 | 14.0 | 13.0 | 13.8 | Fail | Thread-rolling → Heat treatment | 880 | 30 | M14 |
| 34 | C | 860 | 5 | 14.0 | 13.0 | 13.8 | Fail | Thread-rolling → Heat treatment | 880 | 30 | M14 |
| 35 | D | 860 | 90 | 14.0 | 13.0 | 13.8 | Fail | Thread-rolling → Heat treatment | 890 | 40 | M14 |
| 36 | E | 860 | 20 | 13.5 | 13.0 | 7.3 | Fail | Thread-rolling → Heat treatment | 880 | 30 | M14 |
| 37 | Q | - | - | 10.0 | 10.0 | 0.0 | Fail | Thread-rolling → Heat treatment | 880 | 30 | M10 |
| 38 | R | - | - | 10.0 | 10.0 | 0.0 | Fail | Thread-rolling → Heat treatment | 880 | 30 | M10 |
| 39 | T | - | - | 11.0 | 11.0 | 0.0 | Fail | Thread-rolling → Heat treatment | 880 | 30 | M12 |

(continued)

| Sample No. | Steel type | Step 3 (Steel wire →Head-formed product) | | | | | | Step 4 (Head-formed product → Bolt) | | | Bolt size |
| --- | --- | --- | --- | --- | --- | --- | --- | --- | --- | --- | --- |
| | | Heating temperature [°C] | Heating time [min] | Steel-wire diameter [mm] | Shank diameter [mm] | Reduction of rate cross-sectional area [%] | Implementation | Process type | Heating temperature [°C] | Heating time [°C] | |
| 40 | U | 880 | 30 | 12.0 | 11.0 | 16.0 | Pass | Thread-rolling → Heat treatment | 880 | 30 | M12 |
| 41 | V | 880 | 30 | 12.0 | 11.0 | 16.0 | Pass | Thread-rolling → Heat treatment | 880 | 30 | M12 |
| 42 | W | - | - | 10.0 | 10.0 | 0.0 | Fail | Heat treatment → Thread-rolling | 860 | 30 | M10 |
| 43 | X | 880 | 30 | 10.0 | 9.0 | 19.0 | Pass | Heat treatment → Thread-rolling | 860 | 30 | M10 |
| 44 | Y | - | - | 13.0 | 13.0 | 0.0 | Fail | Thread-rolling → Heat treatment | 880 | 30 | M14 |
| 45 | Z | - | - | 11.0 | 11.0 | 0.0 | Fail | Thread-rolling → Heat treatment | 880 | 30 | M12 |

The bolts obtained in this way were examined to evaluate the bolt headability, the tensile strength, the ratio of the B content at the surface, the difference in hardness between the surface and inside, the prior austenite crystal grain size No. and the delayed fracture resistance. Respective measurement methods for them will be described below.

(Evaluation of Bolt Headability)

Bolt cold headability required for manufacturing the bolt was evaluated by the presence or absence of cracks at a flange after bolt-heading. Samples having no crack at the flange were rated good in terms of bolt headability, and thus mentioned as "good" in a column of the bolt headability in Tables 6 and 7. Samples having any crack at the flange were rated bad in terms of bolt headability, and thus mentioned as "bad" in the column.

(Measurement of Tensile Strength)

The tensile strength of the bolt in each sample was determined by a tensile test in accordance with JIS B1051 (2009) .

(Measurement of Ratio of B Content in Surface)

In measuring the B content at the surface of the bolt in each sample, after cutting the header and threaded part from the bolt, the bolt was drilled in the axial direction of the remaining shank portion into a pipe shape with a thickness of 2 mm, and then divided in half, followed by pressing and expanding the divided piece into a plate shape. A surface corresponding to the outer surface of the fabricated plate was analyzed by emission spectroscopic analysis. The B content in the inside of the bolt was determined by sampling a chip from a shank portion of the bolt in the $D_1/4$ position and analyzing the chip by the emission spectroscopic analysis. Then, the B content at the surface was divided by the B content in the inside to thereby determine a reduction ratio of the B content at the surface. At this time, any four positions of each sample were set for the measurement, and the average ratio was calculated. Samples having a difference between the maximum value and minimum value of the above-mentioned ratio that exceed 25% were rated "non-uniform".

(Difference in Hardness Between Surface and Inside)

The hardnesses of the surface and inside of the bolt in each sample were measured in accordance with JIS B1051 (2009) . Samples having a difference in the hardness between the surface and the inside thereof of 60 HV or less were rated "pass".

(Prior Austenite Crystal Grain Size No.)

After cutting a shank portion of the bolt on its cross section perpendicular to the bolt shank, a region with the area of 0.039 mm$^2$ of the bolt from its surface to a depth of 100 $\mu$m was observed using an optical microscope with 400x magnification in accordance with JIS G0551 (2005), thereby measuring the crystal grain size number thereof. The measurement of the crystal grain size number was performed on four fields of view to determine an average of these crystal grain size numbers, which was defined as the prior austenite crystal grain size No. (prior $\gamma$-crystal grain size No.).

(Delayed Fracture Resistance)

The bolt in each sample was fastened in a block-shaped jig by a torque value on which an axial force acts; the axial force was 0.8 times as high as the tensile strength of the bolt. Then, the bolt was immersed in 15% HCl filling a bath. The solution was replaced after one week. Finally, the test was finished when two weeks have passed since the start of the test. The number of fractured bolts at the end of the test was divided by the number of tested bolts to thereby determine the fracture rate (%) . Note that for sample Nos. 38 and 39 that did not achieve the target bolt headability or tensile strength, the boron concentration, hardness, and crystal grain size were not measured, and the delayed fracture test was not performed.

The results of these tests are shown in Tables 6 and 7 below, together with the tempering temperature.

[Table 6]

| Sample No. | Steel type | Manufacturing method | | Bolt headability | Tempering temperature [°C] | Tensile strength [MPa] | Ratio of B content at the surface [%] | Difference in the ratio of B content at the surface [%] | Difference in hardness [Hv] | Prior γ crystal grain size No. | Fracture rate [%] |
|---|---|---|---|---|---|---|---|---|---|---|---|
| | | Step 2 | Step 3 | | | | | | | | |
| 1 | A | Pass | Fail | Good | 400 | 1,169 | 65 | 14 | 10 | 10 | 0 |
| 2 | A | Pass | Fail | Good | 400 | 1,170 | 59 | 16 | 9 | 10 | 0 |
| 3 | A | Fail | Pass | Good | 400 | 1,169 | 67 | 21 | 7 | 10 | 0 |
| 4 | A | Pass | Fail | Good | 400 | 1,167 | 51 | 18 | 10 | 10 | 0 |
| 5 | A | Pass | Fail | Good | 400 | 1,166 | 58 | 14 | 9 | 10 | 0 |
| 6 | B | Pass | Fail | Good | 400 | 1,256 | 67 | 12 | 11 | 12 | 0 |
| 7 | B | Pass | Fail | Good | 400 | 1,258 | 51 | 10 | 6 | 12 | 0 |
| 8 | C | Fail | Pass | Good | 400 | 1,185 | 63 | 22 | 9 | 10 | 0 |
| 9 | C | Pass | Fail | Good | 400 | 1,190 | 49 | 8 | 13 | 9 | 0 |
| 10 | D | Pass | Fail | Good | 400 | 1,266 | 45 | 11 | 16 | 9 | 0 |
| 11 | D | Pass | Fail | Good | 400 | 1,260 | 39 | 12 | 14 | 9 | 0 |
| 12 | E | Pass | Fail | Good | 400 | 1,206 | 53 | 14 | 15 | 9 | 0 |
| 13 | E | Pass | Fail | Good | 400 | 1,200 | 70 | 17 | 5 | 9 | 0 |
| 14 | F | Pass | Fail | Good | 400 | 1,203 | 52 | 14 | 9 | 10 | 0 |
| 15 | F | Pass | Fail | Good | 400 | 1,210 | 49 | 15 | 7 | 10 | 0 |
| 16 | G | Pass | Fail | Good | 400 | 1,345 | 45 | 17 | 20 | 10 | 0 |
| 17 | H | Pass | Fail | Good | 400 | 1,265 | 31 | 14 | 19 | 9 | 0 |
| 18 | I | Pass | Fail | Good | 450 | 1,365 | 37 | 11 | 25 | 10 | 0 |
| 19 | J | Pass | Fail | Good | 400 | 1,192 | 34 | 16 | 18 | 8 | 0 |
| 20 | K | Pass | Fail | Good | 400 | 1,252 | 27 | 15 | 27 | 12 | 0 |
| 21 | L | Pass | Fail | Good | 400 | 1,175 | 30 | 13 | 17 | 12 | 0 |
| 22 | M | Pass | Fail | Good | 400 | 1,270 | 34 | 17 | 22 | 11 | 0 |
| 23 | N | Pass | Fail | Good | 400 | 1,275 | 23 | 14 | 19 | 12 | 0 |

(continued)

| Sample No. | Steel type | Manufacturing method | | Bolt headability | Tempering temperature [°C] | Tensile strength [MPa] | Ratio of B content at the surface [%] | Difference in the ratio of B content at the surface [%] | Difference in hardness [Hv] | Prior γ crystal grain size No. | Fracture rate [%] |
|---|---|---|---|---|---|---|---|---|---|---|---|
| | | Step 2 | Step 3 | | | | | | | | |
| 24 | O | Pass | Pass | Good | 400 | 1,281 | 19 | 6 | 25 | 10 | 0 |
| 25 | P | Pass | Fail | Good | 450 | 1,256 | 12 | 5 | 29 | 9 | 0 |

[Table 7]

| Sample No | Steel type | Manufacturing method | | Bolt headability | Tempering temperature [°C] | Tensile strength [MPa] | Ratio of B content at the surface [%] | Difference in the ratio of B content at the surface [%] | Difference in hardness [Hv] | Prior γ crystal grain size No. | Fracture rate [%] |
|---|---|---|---|---|---|---|---|---|---|---|---|
| | | Step 2 | Step 3 | | | | | | | | |
| 26 | A | Fail | Fail | Good | 400 | 1,163 | 79 | 15 | 23 | 11 | 40 |
| 27 | B | Fail | Fail | Good | 400 | 1,251 | 32 | 19 | 64 | 7 | 70 |
| 28 | C | Fail | Fail | Good | 400 | 1,187 | 77 | 11 | 34 | 10 | 20 |
| 29 | D | Fail | Fail | Good | 400 | 1,258 | 48 | 17 | 70 | 6 | 90 |
| 30 | E | Fail | Fail | Good | 400 | 1,208 | 64 | 29 | 41 | 9 | 50 |
| 31 | F | Fail | Fail | Good | 400 | 1,205 | 58 | 32 | 22 | 9 | 70 |
| 32 | A | Fail | Fail | Good | 400 | 1,165 | 84 | 11 | 23 | 11 | 50 |
| 33 | B | Fail | Fail | Good | 400 | 1,255 | 22 | 22 | 73 | 7 | 70 |
| 34 | C | Fail | Fail | Good | 400 | 1,181 | 90 | 13 | 10 | 10 | 60 |
| 35 | D | Fail | Fail | Good | 400 | 1,266 | 19 | 22 | 77 | 6 | 100 |
| 36 | E | Fail | Fail | Good | 400 | 1,198 | 55 | 33 | 23 | 8 | 50 |
| 37 | Q | Pass | Fail | Good | 450 | 1,224 | 45 | 19 | 13 | 10 | 40 |
| 38 | R | Pass | Fail | Good | 400 | 980 | - | 17 | - | - | - |
| 39 | T | Pass | Fail | Good | 400 | 976 | - | 15 | - | - | - |
| 40 | U | Fail | Pass | Good | 400 | 1,292 | 57 | 21 | 18 | 11 | 100 |
| 41 | V | Fail | Fail | Good | 400 | 1,325 | 43 | 18 | 18 | 10 | 100 |
| 42 | W | Pass | Pass | Good | 400 | 1,242 | 27 | 9 | 19 | 11 | 60 |
| 43 | X | Pass | Fail | Good | 400 | 1,216 | 27 | 17 | 22 | 10 | 40 |
| 44 | Y | Pass | Fail | Good | 400 | 1,253 | 23 | 14 | 34 | 6 | 90 |
| 45 | Z | Pass | Fail | Good | 400 | 1,251 | 61 | 14 | 9 | 11 | 0 |

EP 3 078 758 B1

From these results, the following consideration can be made. That is, in sample Nos. 1 to 25 shown in Table 6 and sample No. 45 shown in Table 7, the chemical compositions and metallic microstructures of the steel materials and the manufacturing conditions were controlled appropriately. Each of these samples achieved the high strength of 1,000 MPa or higher as well as the excellent delayed fracture resistance.

In contrast, in sample Nos. 26 to 44 shown in Table 7, the inappropriate requirements were applied, unlike the appropriate requirements defined by the present invention, resulting in the inferior delayed fracture resistance.

In sample Nos. 26 to 31 as shown in Table 4, the influences by the respective conditions in the step 2 can be understood. Among them, in sample No. 26, the heating temperature before the wire-drawing process was too low to remove boron sufficiently, failing to reduce the B content at the surface, thus degrading the delayed fracture resistance. In sample No. 27 shown in Table 4, the heating temperature before the wire-drawing process was excessively high, resulting in the formation of a thick decarburization layer. Thus, this sample reduced the carbide content with the crystal grains of a bolt superficial layer coarsened, thus degrading the delayed fracture resistance. In sample No. 28 shown in Table 4, the heating time before the wire-drawing process was too short to remove boron sufficiently, failing to reduce the B content at the surface, thus degrading the delayed fracture resistance.

In sample No. 29, the heating time before the wire-drawing process was excessively long, resulting in the formation of a thick decarburization layer. Thus, this sample reduced the carbide content with the crystal grains of a bolt superficial layer coarsened, thus degrading the delayed fracture resistance. In sample No. 30, the reduction rate of the cross-sectional area by the wire-drawing was low, whereby the B content at the surface was not made uniform, thus degrading the delayed fracture resistance. In sample No. 31, the heat treatment was performed after the wire-drawing process. This sample differs from the present invention in the processing steps, whereby the B content in the bolt surface was not made uniform, thus degrading the delayed fracture resistance.

In sample Nos. 32 to 36 as shown in Table 5, the influences by the respective conditions in the step 3 can be understood. Among them, in sample No. 32, the heating temperature before the heading process was too low to remove boron sufficiently, failing to reduce the B content at the surface, thus degrading the delayed fracture resistance. In sample No. 33, the heating temperature before the heading process was excessively high, resulting in the formation of a thick decarburization layer. Thus, this sample reduced the carbide content with the crystal grains of a bolt superficial layer coarsened, thus degrading the delayed fracture resistance.

In sample No. 34, the heating time before the heading process was too short to remove boron sufficiently, failing to reduce the B content at the surface, thus degrading the delayed fracture resistance. In sample No. 35, the heating time before the heading process was excessively long, resulting in the formation of a thick decarburization layer. Thus, this sample reduced the carbide content with the crystal grains of a bolt superficial layer coarsened, thus degrading the delayed fracture resistance. In sample No. 36, the reduction rate of the cross-sectional area of the bolt shank portion by the heading process was low, whereby the B content in the bolt surface was not made uniform, thus degrading the delayed fracture resistance.

Sample Nos. 37 to 44 were made under the appropriate manufacturing conditions, but had inappropriate compositions of the steels, resulting in inferior tensile strength, delayed fracture resistance, and bolt headability. Sample No. 37 used the steel Q shown in Table 1 and had a large C content, leading to the reduction in the toughness and corrosion resistance, thus degrading the delayed fracture resistance. Sample No. 38 used the steel R shown in Table 1 and had a small C content, failing to achieve the strength of 1,000 MPa or higher under the present heat-treatment condition.

Sample No. 39 used the steel T shown in Table 1 and had a small Mn content, failing to achieve the strength of 1,000 MPa or higher under the present heat-treatment condition. Sample No. 40 used the steel U shown in Table 1 and had a large Mn content, assisting in the segregation of Mn into the austenite crystal grain boundary, thus degrading the delayed fracture resistance.

Sample No. 41 used the steel V shown in Table 1 and had a large P content, whereby P caused the grain boundary segregation, reducing the strength of the grain boundary, thus degrading the delayed fracture resistance. Sample No. 42 used the steel S shown in Table 1 and had a large S content, whereby sulfides were segregated in the grain boundary to thereby reduce the strength of the grain boundary, thus degrading the delayed fracture resistance. Sample No. 43 used the steel X shown in Table 1 and had a small Cr content, leading to the reduction in the corrosion resistance, thus degrading the delayed fracture resistance. Sample No. 44 used the steel Y shown in Table 1 and had small Ti and Nb contents, causing the grain coarsening, thus degrading the delayed fracture resistance.

**Claims**

1. A steel wire for bolts, consisting of, in percentage by mass:

     C: 0.20 to 0.35%;
     Si: 0.01% to 2.0%;

Mn: 0.3 to 1.5%;
P: more than 0% and 0.020% or less;
S: more than 0% and 0.020% or less;
Cr: 0.10 to 1.5%;
Al: 0.01 to 0.10%;
B: 0.0005 to 0.005%;
N: 0.001% to 0.015%; and
at least one element of Ti: 0.02 to 0.10% and Nb: 0.02 to 0.10%,
optionally at least one of the following elements (a) to (d):

   (a) one or more elements selected from the group consisting of: Cu: more than 0% and 0.3% or less, Ni: more than 0% and 0.5% or less, and Sn: more than 0% and 0.5% or less;
   (b) at least one element of Mo: more than 0% and 0.30% or less and V: more than 0% and 0.30% or less;
   (c) at least one element of Mg: more than 0% and 0.01% or less and Ca: more than 0% and 0.01% or less; and
   (d) at least one element of Zr: more than 0% and 0.3% or less and W: more than 0% and 0.3% or less,

and the balance consisting of iron and inevitable impurities, wherein
when a rate of a B content at $D_0/4$ part in the steel wire for bolts is 100% where $D_0$ is a diameter of the steel wire for bolts, a ratio of a B content at a surface of the steel wire for bolts is 75% or less on average, and a difference between a maximum value and a minimum value of the ratio is 25% or less, and
wherein a prior austenite crystal grain size number in a region from the surface to a depth of 100 $\mu$m of the steel wire for bolts is No. 8 or more.

2. A method of manufacturing a steel wire for bolts comprising at least a manufacturing step (1) below, using a wire material having the chemical composition according to claim 1:

   (1) in a step of wire-drawing the wire material into the steel wire for bolts, the wire material before wire-drawing is heated at a temperature from 650 to 800°C for 3 to 24 hours, and then drawn so that a reduction rate of the cross-sectional area is 23% or more.

3. A bolt produced by forming a steel wire for bolts into a bolt shape, the steel wire consisting of, in percentage by mass:

   C: 0.20 to 0.35%;
   Si: 0.01% to 2.0%;
   Mn: 0.3 to 1.5%;
   P: more than 0% to 0.020% or less;
   S: more than 0% and 0.020% or less;
   Cr: 0.10 to 1.5%;
   Al: 0.01 to 0.10%;
   B: 0.0005 to 0.005%;
   N: 0.001% to 0.015%; and
   at least one element of Ti: 0.02 to 0.10% and Nb: 0.02 to 0.10%,
   optionally at least one of the following elements (a) to (d):

      (a) one or more elements selected from the group consisting of: Cu: more than 0% and 0.3% or less, Ni: more than 0% and 0.5% or less, and Sn: more than 0% and 0.5% or less;
      (b) at least one element of Mo: more than 0% and 0.30% or less and V: more than 0% and 0.30% or less;
      (c) at least one element of Mg: more than 0% and 0.01% or less and Ca: more than 0% and 0.01% or less; and
      (d) at least one element of Zr: more than 0% and 0.3% or less and W: more than 0% and 0.3% or less

and the balance consisting of iron and inevitable impurities, wherein
when a rate of a B content at $D_1/4$ part in the bolt is 100% where $D_1$ is a diameter of a shank portion of the bolt, a ratio of a B content at the surface of the bolt is 75% or less on average, and a difference between a maximum value and a minimum value of the ratio is 25% or less, and wherein a prior austenite crystal grain size number in a region from the surface to a depth of 100 $\mu$m of the bolt is No. 8 or more, wherein the bolt has a tensile strength of 1,000 to 1,400 MPa.

4. A method of manufacturing a bolt comprising at least one of manufacturing steps (1) and (2) below, using a wire material having the chemical composition according to claim 3:

(1) in a step of wire-drawing the wire material into the steel wire for bolts, the wire material before wire-drawing is heated at a temperature from 650 to 800°C for 3 to 24 hours, and then drawn so that a reduction rate of the cross-sectional area is 23% or more; and

(2) in a step of hot-heading for forming the steel wire for bolts into a shape of a head-formed product, the steel wire for bolts before hot-heading is heated at a temperature from 800 to 950°C for 10 to 60 minutes, and then hot-heading so that a reduction rate of the cross-sectional area at the axial part of the bolt is 10% or more when forming the steel wire for bolts into the shape of the head-formed product.

**Patentansprüche**

1. Stahldraht für Bolzen, bestehend aus, in Massenprozent:

C: 0,20 bis 0,35%;
Si: 0,01% bis 2,0%;
Mn: 0,3 bis 1,5%;
P: mehr als 0% und 0,020% oder weniger;
S: mehr als 0% und 0,020% oder weniger;
Cr: 0,10 bis 1,5%;
Al: 0,01 bis 0,10%;
B: 0,0005 bis 0,005%;
N: 0,001 % bis 0,015%; und
mindestens ein Element von Ti: 0,02 bis 0,10% und Nb: 0,02 bis 0,10%, gegebenenfalls mindestens eines der folgenden Elemente (a) bis (d):

(a) ein oder mehrere Elemente, ausgewählt aus der Gruppe bestehend aus: Cu: mehr als 0% und 0,3% oder weniger, Ni: mehr als 0% und 0,5% oder weniger, und Sn: mehr als 0% und 0,5% oder weniger;
(b) mindestens ein Element von Mo: mehr als 0% und 0,30% oder weniger und V: mehr als 0% und 0,30% oder weniger;
(c) mindestens ein Element von Mg: mehr als 0% und 0,01% oder weniger und Ca: mehr als 0% und 0,01% oder weniger; und
(d) mindestens ein Element von Zr: mehr als 0% und 0,3% oder weniger und W: mehr als 0% und 0,3% oder weniger,
und der Rest bestehend aus Eisen und unvermeidlichen Verunreinigungen, wobei

wenn eine Rate eines B-Gehalts an einem $D_0$/4-Teil im Stahldraht für Bolzen 100% beträgt, wobei $D_0$ ein Durchmesser des Stahldrahtes für Bolzen ist, beträgt ein Verhältnis eines B-Gehalts an einer Oberfläche des Stahldrahtes für Bolzen durchschnittlich 75% oder weniger, und ein Unterschied zwischen einem Maximalwert und einem Minimalwert des Verhältnisses beträgt 25% oder weniger, und
wobei eine Kristallkorngrößenzahl von früherem Austenit in einem Bereich von der Oberfläche bis zu einer Tiefe von 100 $\mu$m des Stahldrahts für Bolzen Nr. 8 oder mehr ist.

2. Verfahren zur Herstellung eines Stahldrahts für Bolzen, umfassend mindestens einen nachstehenden Herstellungsschritt (1), unter Verwendung eines Drahtmaterials mit der chemischen Zusammensetzung nach Anspruch 1:

(1) in einem Schritt des Drahtziehens des Drahtmaterials in den Stahldraht für Bolzen, wird das Drahtmaterial vor dem Drahtziehen für 3 bis 24 Stunden auf eine Temperatur von 650 bis 800°C erwärmt und dann so gezogen, dass eine Reduktionsrate der Querschnittsfläche 23% oder mehr beträgt.

3. Bolzen, hergestellt durch Formen eines Stahldrahtes für Bolzen in eine Bolzenform, der Stahldraht bestehend aus, in Massenprozent:

C: 0,20 bis 0,35%;
Si: 0,01% bis 2,0%;
Mn: 0,3 bis 1,5%;
P: mehr als 0% bis 0,020% oder weniger;

S: mehr als 0% und 0,020% oder weniger;

Cr: 0,10 bis 1,5%;

Al: 0,01 bis 0,10%;

B: 0,0005 bis 0,005%;

N: 0,001% bis 0,015%; und

mindestens ein Element von Ti: 0,02 bis 0,10% und Nb: 0,02 bis 0,10%, gegebenenfalls mindestens eines der folgenden Elemente (a) bis (d):

(a) ein oder mehrere Elemente, ausgewählt aus der Gruppe bestehend aus: Cu: mehr als 0% und 0,3% oder weniger, Ni: mehr als 0% und 0,5% oder weniger, und Sn: mehr als 0% und 0,5% oder weniger;

(b) mindestens ein Element von Mo: mehr als 0% und 0,30% oder weniger und V: mehr als 0% und 0,30% oder weniger;

(c) mindestens ein Element von Mg: mehr als 0% und 0,01% oder weniger und Ca: mehr als 0% und 0,01% oder weniger; und

(d) mindestens ein Element von Zr: mehr als 0% und 0,3% oder weniger und W: mehr als 0% und 0,3% oder weniger,

und der Rest bestehend aus Eisen und unvermeidlichen Verunreinigungen, wobei

wenn eine Rate eines B-Gehalts an einem $D_1/4$-Teil in dem Bolzen 100% beträgt, wobei $D_1$ ein Durchmesser eines Schaftabschnitts des Bolzens ist, beträgt ein Verhältnis eines B-Gehalts an der Oberfläche des Bolzens durchschnittlich 75% oder weniger und eine Differenz zwischen einem Maximalwert und einem Minimalwert des Verhältnisses beträgt 25% oder weniger, und wobei eine Kristallkorngrößenzahl von früherem Austenit in einem Bereich von der Oberfläche bis zu einer Tiefe von 100 μm des Bolzens Nr. 8 oder mehr ist, wobei der Bolzen eine Zugfestigkeit von 1000 bis 1400 MPa aufweist.

4. Verfahren zur Herstellung eines Bolzens, umfassend mindestens einen der folgenden Herstellungsschritte (1) und (2), unter Verwendung eines Drahtmaterials mit der chemischen Zusammensetzung nach Anspruch 3:

(1) in einem Schritt des Drahtziehens des Drahtmaterials in den Stahldraht für Bolzen wird das Drahtmaterial vor dem Drahtziehen für 3 bis 24 Stunden auf eine Temperatur von 650 bis 800°C erwärmt und dann so gezogen, dass eine Reduktionsrate der Querschnittsfläche 23% oder mehr beträgt; und

(2) in einem Schritt des Heißköpfens zum Formen des Stahldrahtes für Bolzen in eine Form eines kopfgeformten Produkts, wird der Stahldraht für Bolzen vor dem Heißköpfen für 10 bis 60 Minuten auf eine Temperatur von 800 bis 950°C erwärmt, und dann heißgeköpft, so dass eine Reduktionsrate der Querschnittsfläche am axialen Teil des Bolzens 10% oder mehr beträgt, wenn der Stahldraht für Bolzen in die Form des kopfgeformten Produkts geformt wird.

**Revendications**

1. Fil d'acier pour boulons, consistant, en pourcentage en masse :

C : 0,20 à 0,35% ;

Si : 0,01% à 2,0% ;

Mn : 0,3 à 1,5% ;

P : plus de 0% et 0,020% ou moins ;

S : plus de 0% et 0,020% ou moins ;

Cr : 0,10 à 1,5% ;

Al : 0,01 à 0,10% ;

B : 0,0005 à 0,005% ;

N : 0,001% à 0,015% et

au moins un élément parmi Ti : 0,02 à 0,10% et Nb : 0,02 à 0,10%,

le cas échéant, au moins l'un des éléments (a) à (d) suivants :

(a) un ou plusieurs éléments choisis parmi le groupe consistant en : Cu : plus de 0% et 0,3% ou moins, Ni : plus de 0% et 0,5% ou moins, et Sn : plus de 0% et 0,5% ou moins ;

(b) au moins un élément parmi Mo : plus de 0% et 0,30% ou moins et V : plus de 0% et 0,30% ou moins ;

(c) au moins un élément parmi Mg : plus de 0% et 0,01% ou moins et Ca : plus de 0% et 0,01% ou moins ; et

(d) au moins un élément parmi Zr : plus de 0% et 0,3% ou moins et W : plus de 0% et 0,3% ou moins,

le reste étant du fer et les impuretés inévitables, où
lorsque le rapport de la teneur en B à $D_0/4$ parties dans le fil d'acier pour boulons est 100% où $D_0$ est un diamètre du fil d'acier pour boulons, le rapport de la teneur en B à la surface du fil d'acier pour boulons est 75% ou moins en moyenne, et la différence entre la valeur maximale et la valeur minimale du rapport se situe à 25% ou moins, et où le numéro de la taille des grains de cristal austénite dans une région allant de la surface à une profondeur de 100 $\mu$m du fil d'acier pour boulons est N°8 ou plus.

2. Procédé de préparation d'un fil d'acier pour boulons, comprenant au moins une étape de préparation (1) ci-dessous, utilisant un matériau de fil ayant la composition chimique selon la revendication 1 :

(1) dans une étape d'étirage de fil du matériau de fil en le fil d'acier pour boulons, le matériau de fil avant étirage en fil est chauffé à une température allant de 650 à 800°C pendant 3 à 24 heures, puis étiré de sorte que le taux de réduction de la surface transversale se situe à 23% ou plus.

3. Boulon produit par mise en forme d'un fil d'acier pour boulons en forme de boulon, le fil d'acier consistant en, en pourcentage en masse :

C : 0,20 à 0,35% ;
Si : 0,01% à 2,0% ;
Mn : 0,3 à 1,5% ;
P : plus de 0% et 0,020% ou moins ;
S : plus de 0% et 0,020% ou moins ;
Cr : 0,10 à 1,5% ;
Al : 0,01 à 0,10% ;
B : 0,0005 à 0,005% ;
N : 0,001% à 0,015% et
au moins un élément parmi Ti : 0,02 à 0,10% et Nb : 0,02 à 0,10%,
le cas échéant, au moins l'un des éléments (a) à (d) suivants :

(a) un ou plusieurs éléments choisis parmi le groupe consistant en : Cu : plus de 0% et 0,3% ou moins, Ni : plus de 0% et 0,5% ou moins, et Sn : plus de 0% et 0,5% ou moins ;
(b) au moins un élément parmi Mo : plus de 0% et 0,30% ou moins et V : plus de 0% et 0,30% ou moins ;
(c) au moins un élément parmi Mg : plus de 0% et 0,01% ou moins et Ca : plus de 0% et 0,01% ou moins ; et
(d) au moins un élément parmi Zr : plus de 0% et 0,3% ou moins et W : plus de 0% et 0,3% ou moins,

le reste étant du fer et les impuretés inévitables, où
lorsque le rapport de la teneur en B à $D_1/4$ parties dans le fil d'acier pour boulons est 100% où $D_1$ est un diamètre d'une portion de tige du boulon, le rapport de la teneur en B à la surface du fil d'acier pour boulons est 75% ou moins en moyenne, et la différence entre la valeur maximale et la valeur minimale du rapport se situe à 25% ou moins, et où le numéro de la taille des grains de cristal austénite dans une région allant de la surface à une profondeur de 100 $\mu$m du fil d'acier pour boulons est N°8 ou plus, où le boulon a une résistance en traction située dans l'intervalle allant de 1000 à 1400 MPa.

4. Procédé de préparation d'un fil d'acier pour boulons, comprenant au moins l'une des étapes de préparation (1) et (2) ci-dessous, utilisant un matériau de fil ayant la composition chimique selon la revendication 3 :

(1) dans une étape d'étirage de fil du matériau de fil en le fil d'acier pour boulons, le matériau de fil avant étirage en fil est chauffé à une température allant de 650 à 800°C pendant 3 à 24 heures, puis étiré de sorte que le taux de réduction de la surface transversale se situe à 23% ou plus ; et
(2) dans une étape de frappe à chaud pour la mise en forme du fil d'acier pour boulons en une forme de produit formé à chaud, le fil d'acier pour boulons étant chauffé avant la frappe à chaud à une température allant de 800 à 950°C pendant 10 à 60 minutes, puis la frappe à chaud pour que le taux de réduction de la surface transversale de la partie axiale du boulon soit de 10% ou plus lors de la mise en forme du fil d'acier pour boulons en la forme du produit formé par frappe.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11043737 A
- JP 10053834 A
- WO 2011108459 A
- JP 2001062639 A
- WO 2006088019 A1
- JP 2013249563 A